(19) Europäisches Patentamt
European Patent Office
Office européen des brevets

(11) **EP 3 070 416 A1**

(12) **EUROPEAN PATENT APPLICATION**

(43) Date of publication:
**21.09.2016 Bulletin 2016/38**

(51) Int Cl.:
**F24J 2/06** *(2006.01)* **F24J 2/07** *(2006.01)*

(21) Application number: **15159207.8**

(22) Date of filing: **16.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ETH Zurich**
**8092 Zurich (CH)**

(72) Inventors:
• **Steinfeld, Aldo**
  **5200 Brugg (CH)**
• **Cooper, Thomas**
  **Singhampton, Ontario**
  **N0C 1M0 (CA)**
• **Haueter, Philipp**
  **5022 Rombach (CH)**

(54) **SOLAR RADIATION GUIDANCE DEVICE**

(57)      Solar radiation guidance device (1), particularly for a solar reactor system (100), comprising the following components:
- a solar concentrator (13), for collecting and concentrating electromagnetic radiation,
- a solar deflection device (10) comprising a funnel (2) with a funnel wall (2a) that comprises a specular reflective surface (2b) on an inside of the funnel (2) for reflecting solar and/or thermal radiation, wherein said funnel (2) further comprises an inlet aperture (3) and an exit aperture (4), wherein the inlet aperture (3) is comprised in an inlet plane (3a) and the exit aperture (4) is comprised in an exit plane (4a), and wherein said funnel (2) is arranged such that it collects the concentrated electromagnetic radiation from the solar concentrator (13), wherein the solar deflection device (10) is mounted to allow rotation around a rotation axis (A) perpendicular to the inlet plane (3a) of the inlet aperture (3) between at least two positions, such that for each position of the at least two positions of the solar deflection device (10) the collected electromagnetic radiation from the solar concentrator (13) is redirectable through the funnel (2) along a corresponding direction.

Fig. 1

EP 3 070 416 A1

**Description**

The invention relates to a solar radiation guidance device according to claim 1, a solar reactor system according to claim 8, and a method for deflecting solar radiation with a solar radiation guidance device according to claim 9.

Solar reactor systems generally comprise a solar concentrator that is designed to collect and concentrate solar radiation and to provide said radiation as an energy source for driving various endothermic processes. Such processes for example comprise chemical reactions or physical processes the latter for example driving a motor or a turbine. Of particular interest are solar reactor systems for producing chemical fuels from $H_2O$ and $CO_2$, designed for driving the $H_2O/CO_2$-splitting via thermochemical redox cycles using concentrated solar radiation.

Such a thermochemical redox cycle for example comprises a two-step process that is given by a first endothermic step comprising a solar-driven thermal reduction of a metal oxide that requires thermal energy for being reduced to a lower valence metal oxide and a second, non-solar step that is exothermic comprising the oxidation reaction of the reduced lower valence metal oxide with water or carbon dioxide to the higher valence metal oxide and hydrogen or carbon monoxide:

$1^{st}$ step, reduction:     $2\ MO_{ox} \rightarrow 2\ MO_{red} + O_2$

$2^{nd}$ step, oxidation:     $MO_{red} + H_2O \rightarrow MO_{ox} + H_2$ or
$MO_{red} + CO_2 \rightarrow MO_{ox} + CO$

However, as can be seen for example from the above equations, a two-step process that particularly requires a cooling period (for example the $2^{nd}$ step), would need interruption of the solar radiation exposure. On the other hand, solar radiation is not permanently available as weather conditions might change or it is interrupted by the day-night circle. Therefore it might be economically disadvantageous to interrupt (and thus discard) solar radiation exposure of the process, when weather conditions are favorable, i.e. sunny. In order to circumvent this problem, reactor systems comprising two chambers have been designed in order to alternately provide solar radiation to one of the two chambers. These reactor systems offer the possibility of moving the two cavities such that each cavity's aperture is alternately centered at the focal plane of the solar concentrator. Alternatively the concentrator is moved in order to shift the focal plane relative to a fixed cavity. Both solutions are deemed unpractical, as of the complications that might arise by moving high-temperature reactors or by moving the solar concentrating system.

Therefore the problem underlying the invention is to provide a solar guidance device, a solar reactor system and a method that provide a practical, economic and cost-effective solution for guiding solar radiation alternatingly to at least two chambers, particularly while further concentrating the incident solar radiation.

The problem according the invention is solved by a solar guidance device having the features of claim 1, a solar reactor system according to claim 8 and a method for deflecting solar radiation according to claim 9. Preferred embodiments are stated in the sub claims.

According to claim 1 a solar radiation guidance device, particularly for a solar reactor system, comprises the following components:

-   a solar concentrator, for collecting and concentrating radiation,
-   a solar deflection device comprising a funnel with a funnel wall that comprises a specular reflective surface, particularly predominantly specular reflective surface, on an inside of the funnel for reflecting radiation, wherein said funnel further comprises an inlet aperture and an exit aperture, wherein the inlet aperture is comprised in an inlet plane and the exit aperture is comprised in an exit plane, and wherein said funnel is arranged such that it collects the concentrated radiation from the solar concentrator, wherein

the solar deflection device is mounted to allow rotation around a rotation axis perpendicular to the inlet plane of the inlet aperture between at least two positions, such that for each position of the at least two positions of the solar deflection device the collected radiation from the solar concentrator is redirectable through the funnel along a corresponding particularly unique direction.

Radiation in the context of the application refers particularly to electromagnetic radiation, more particularly to solar and /or thermal radiation.

The radiation spectrum that is deflected by the funnel therefore covers the electromagnetic particularly the solar and/ or thermal radiation spectrum and ranges particularly from the invisible ultra-violet to the deep infrared radiation, more particularly the reflective surface material is reflective from 280 nm to 4000 nm (vacuum wavelength), as this is particularly the range used for the ASTM (American Society for Testing and Materials) Air Mass 1.5 Direct Solar Spectrum specification that for example provides terrestrial reference spectra for photovoltaic performance evaluation.

A material is considered to be reflective particularly if the reflectivity is larger than 60%, particularly at a design wavelength, that is comprised in the mentioned wavelength range. A reflectivity below 60% would cause significant absorption and thus render the device particularly non-economical. A reflectivity of larger than 90% is preferred. The reflective surface is particularly predominantly specular that is mirror-like. A small fraction of small angle scattering and diffuse reflection is permissible.

The solar deflection device has dimensions ranging particularly from several centimeters to several meters.

A solar concentrator might be any device, for example a mirror or a lens, or a plurality of mirrors or lenses arranged in a focal system, that is exposed to the radiation and is designed for concentrating said radiation to a focal plane, particularly to a focal region.

By employing the rotatably mounted solar deflection device, radiation can be guided to a plurality of directions without the need to move the solar concentrator or - if available - without moving chambers, in order to provide solar radiation energy to a chemical or physical process. The application of the solar radiation guidance device is more cost-effective and more robust than moving solar reactors or moving concentrators. Furthermore the solar radiation guidance device enables the operation of both steps of a redox cycle simultaneously by delivering incoming concentrated electromagnetic radiation, such as for example solar and / or thermal radiation e.g. from a fixed solar concentrator alternately to fixed cavities apertures while particularly providing additional solar concentration.

The funnel of the solar deflection device is particularly of tube-like nature, i.e. it particularly does not comprise additional apertures except the inlet and exit aperture. The solar deflection device is particularly designed such that the inlet and exit aperture are arranged such, that the center of area of the inlet and exit aperture are laterally shifted with respect to each other.

Furthermore the funnel might comprise one or more rim sections at the openings of the funnel that extend beyond the inlet plane or the exit plane. Such rim sections might be for example advantageous to provide a light-sealed funnel from the solar concentrator to a cavity aperture or opening of a chamber, such that the radiation is completely guided into the cavity or chamber.

It is clear that the solar radiation guidance device is capable of redirecting incident radiation in more than two directions and that it can be designed to adopt more than two positions. Thus, it is particularly designed for solar reactor systems that comprise more than two cavities or chambers.

In a another embodiment of the invention, the solar deflection device is further characterized by an essentially curved virtual line that extends from a center of the inlet aperture to a center of the exit aperture, wherein for each plane that intersects said curved line perpendicularly, the reflective surface of the funnel wall has a cross-section along said plane, wherein said cross-section encloses an area and is centered around the curved line, particularly wherein said curved line is essentially an arc line, particularly essentially a circular arc line or particularly a non-parabolic line.

In case of a circular shape of the curved line, said curved line particularly has a center in a common origin of a Cartesian coordinate system.

In this context the term "essentially curved" refers to the fact that the curved line might comprise short sections that are straight. These straight sections particularly add up to less than 10 % of the total length of the curved line.

Besides the mentioned circular or non-parabolic line shape of the curved line, other particularly combined line geometries are possible, like an arc line and a straight line combined, and/or a cubic spline or quadratic spline. In some case it might be advantageous if the curved line is essentially parabolic.

The curved line is of virtual nature. In case the plane of the cross-section and the inlet plane do not intersect the deflection angle can be defined as zero.

Said embodiment is particularly advantageous as the design of such a solar deflection device is comparable simple and easy to implement in manufacturing practices.

In another embodiment of the invention the solar deflection device further comprises a deflection angle that is enclosed between said plane and the inlet plane.

In another embodiment of the invention the area enclosed by the inlet aperture, the area enclosed by the exit aperture and/or the area enclosed by the cross-section has/have an oval, particularly a circular shape or elliptical shape.

This is particularly advantageous as the circular geometries in general provide geometries that have fewer reflections for the radiation while being funneled through the deflection device. This design particularly allows different shapes for the inlet and the exit aperture and thus rendering the guidance device applicable to a variety of solar reactor systems. Particularly intermediate cross-sectional shapes of the solar deflection device can for example be derived by a so-called lofting process.

According to another embodiment of the invention, the area of the inlet aperture is larger than the area of the exit aperture.

If the inlet and/ or exit aperture have a circular shape then particularly the diameter / radius of the area of the inlet aperture is larger than the diameter/radius of the exit aperture. This design has the advantage that the incident radiation might be concentrated further.

In another embodiment of the invention at preferably each point of the curved line, the curved line has a curvature that is other, particularly larger than zero. Thus, the solar deflection device exhibits particularly a shape that is curved along one direction, preferably without being sinuous. This geometry particularly is ensuring a minimum number of reflections within the funnel of the solar deflection device.

According to another embodiment of the invention the area of the cross-section, particularly the diameter or radius of the cross-section, is a continuous function of said deflection angle and wherein said function is a monotonic function, particularly a strictly monotonic function.

This is an advantageous way to particularly parametrize the shape of the reflective surface of the solar deflection device with a parameter, namely with the deflection angle. A second parameter, the circumferential angle, can also be taken in account. More parameters may also be used.

Another advantage of this embodiment is that designs based on such a monotonic function generically provide solar deflection devices that have few reflections of the incident radiation and thus exhibit less energy loss as compared to devices whose "taper" function is not monotonic.

In another preferred embodiment of the invention, the function is continuously differentiable at least once, particularly twice, more particularly three times. This allows particularly for a smooth shape of the reflective surface of the funnel, which in turn is advantageous to keep losses due to transmission of the radiation through the funnel at a minimum.

According to another embodiment of the invention, the function comprises a spline function, particularly a linear, a quadratic or a cubic, particularly a natural cubic spline function or wherein the function comprises or is a piecewise particularly natural cubic spline function connecting a plurality of interpolation points, wherein particularly the size of the enclosed area of the inlet aperture, particularly the diameter or radius of the inlet aperture, and the size of the enclosed area of the exit aperture, particularly the diameter or radius of the exit aperture are two of the plurality of interpolation points and wherein particularly a third interpolation point corresponds to the size of enclosed area of the cross-section, particularly to the diameter or radius of the surface of the funnel wall of the cross-section, that lies in a plane in between the inlet plane and the exit plane.

Spline functions are a specific form of interpolation functions. Depending on the number of interpolation points different kinds of splines might be used as interpolation function.

A spline is an advantageous interpolating function that is comparably easy to handle computationally (as compared to e.g. global polynomial interpolants).

Particularly due to the high degree of smoothness, the cubic spline is a preferred interpolation function.

In order to maximize the transfer efficiency of the solar deflection device, that is to minimize reflective losses of the radiation within the funnel, particularly the position of the third interpolation point corresponding to the area of the cross-section can be tailored by e.g. ray-tracing simulations. Furthermore optimization of transfer efficiency might be achieved also by varying the area of the cross-section(s).

In another embodiment of the invention, the inlet plane comprising the inlet aperture and the exit plane comprising the exit aperture enclose a deflection angle between 30 ° and 60°, preferably 45°.

In another embodiment of the invention, the solar deflection device comprises a nominal half acceptance angle between 30° and 60°, preferably 45°. The nominal half acceptance angle is particularly defined as the angle under which radiation incident on the inlet aperture of the solar deflection device is theoretically guided through the funnel. Said acceptance angle is measured with respect to a surface normal of the area of the inlet aperture.

In another embodiment of the invention the inlet plane and the exit plane are perpendicular to the curved line at the respective point of contact.

According to claim 8 a solar reactor system comprising a solar radiation guidance device according to the invention is provided, wherein the solar reactor system further comprises at least two chambers wherein each of the chambers is associated to one of the at least two positions of the solar radiation guidance device, wherein each chamber comprises an inlet opening for receiving electromagnetic, particularly solar and/or thermal radiation and wherein each chamber is arranged such that by rotation of the solar deflection device about the rotation axis, the exit aperture of the solar deflection device is alignable particularly alternatingly with the inlet opening of each chamber such that the collected radiation is directable particularly alternatingly through the inlet opening of each chamber.

A chamber is particularly a device for conducting a reaction, or for driving a physical process. Thus a chamber does not necessarily need to comprise a cavity but can be for example a planar device that is designed for absorbing radiation.

The inlet opening might be covered by a particularly transparent material in order to seal or thermally isolate the chamber from the outside.

The problem according to the invention is furthermore solved by a method for deflecting electromagnetic, particularly solar and/or thermal radiation with a solar radiation guidance device or with a solar reactor system.

According to claim 9 the method according to the invention comprises the steps of:

- providing radiation to the solar concentrator, such that the solar concentrator collects at least a fraction of the radiation,
- providing the collected radiation from the solar concentrator to the inlet aperture of the funnel of the solar deflection device,

- rotating the solar deflection device of the solar radiation guidance device alternately to the at least two positions, such that for each position of the at least two positions the collected radiation from the solar concentrator of the solar radiation guidance device is redirected along said corresponding direction.

Executing this method assures particularly the economic use of solar radiation, as solar radiation is continuously used whenever it is available, i.e. whenever the weather conditions allow, by providing said radiation along at least two directions alternatingly, such that for example solar-driven two-step redox-processes can be conducted simultaneously.

In a preferred embodiment of the invention the collected radiation is redirected for each position of the at least two positions of the solar deflection device in a corresponding chamber.

According to another embodiment of the invention, it is provided that by rotating the solar deflection device alternatingly between the at least two positions and thus providing the radiation to the at least two chambers alternatingly, a thermochemical reaction, particularly a reversible thermochemical reaction, is driven, such that an endothermic transformation is taking place in the corresponding chamber to which the radiation is redirected, and that an exothermic or thermally neutral transformation is taking place in at least one of the other, that are the remaining non-exposed, chambers of the at least two chambers.

This is an especially economical way to continuously make use of solar radiation in said thermochemical reactions. According to this embodiment of the invention said thermochemical reactions can be driven simultaneously, wherein the endothermic reaction step of the thermochemical reaction is taking place in the chamber that is exposed to the radiation and wherein the exothermic reaction step of the thermochemical reaction is taking place in the non-exposed chambers of the at least two chambers. The thermochemical reaction is particularly driven by the energy deposited by the radiation to the reaction, e.g. by absorption.

In a variation of the invention a method is provided that by rotating the solar deflection device alternatingly between the at least two positions and thus providing the radiation to the at least two chambers alternatingly, a thermal energy charging process is driven, such that thermal heating is taking place in the corresponding chamber to which the radiation is redirected, and that thermal cooling is taking place in at least one of the other, non-exposed chambers of the at least two chambers.

The thermal cooling is not necessary an active cooling (i.e. by applying a heat exchanger) but passive cooling process that for example happens when the supply of solar / thermal energy form the radiation is interrupted.

According to another embodiment of the invention a first and a second compound are provided for the thermochemical reaction, particularly reversible thermochemical reaction, within the at least two chambers, wherein the first compound is reduced to the second compound, particularly thermally reduced, when the radiation is redirected in the corresponding chamber such that the first compound is exposed to the radiation and/or wherein the second compound is oxidized to the first compound, particularly thermally oxidized, when the radiation is redirected in another, chamber of the at least two the chambers such that the second compound is not exposed to said radiation.

In a preferred embodiment of the invention the first compound comprises at least one of:

- a metal oxide,
- a metal-based oxides,
- a doped-oxide and/or
- a perovskite-type oxide.

An example for a first compounds is cerium(IV) oxide ($CeO_2$), particularly in non-stoichiometric compositions of cerium oxide ($CeO_{1.5}$ to $CeO_2$) and/ or zinc oxide (ZnO).

Furthermore lanthanum manganite ($LaMnO_3$), particularly doped with calcium (Ca), and/ or strontium (Sr), and/ or aluminium (Al) is a suitable first compound.

According to another embodiment of the invention a third compound is provided with the second compound and wherein said third compound is reduced when the second compound is oxidized, wherein said third compound is particularly water ($H_2O$) and/ or carbon dioxide ($CO_2$).

The following reaction can therefore take place, wherein the first compound corresponds to $MO_{ox}$ (for example a metal oxide) and the second compound corresponds to $MO_{red}$ (for example the reduced form of the metal oxide) and the third compound corresponds to $H_2O$ and $CO_2$.

Reduction with exposure to solar radiation:

$$2\,MO_{ox} \rightarrow 2\,MO_{red} + O_2$$

Oxidation without exposure to solar radiation

$$MO_{red} + H_2O \rightarrow MO_{ox} + H_2 \text{ and/ or}$$

$$MO_{red} + CO_2 \rightarrow MO_{ox} + CO,$$

The problem according to the invention is furthermore solved by a piston engine for converting concentrated radiation into mechanical energy, comprising at least two cylinder units, wherein each cylinder unit provides at least one piston arranged reciprocatably inside of a respective cylinder, and further comprising a solar radiation guidance device according to the invention, wherein the at least two cylinder units are positioned corresponding to the at least two positions of the solar deflection device such that by rotation of the solar deflection device about the rotation axis, the exit aperture of the solar deflection device is alternately alignable with each cylinder unit such that the collected radiation is alternately directable to each cylinder unit.

The invention furthermore relates to a method for driving a piston engine according to the invention, comprising the steps of:

- providing electromagnetic, particularly solar and/or thermal radiation to the solar concentrator, such that the concentrator collects at least a fraction of the radiation,
- providing the collected radiation to the inlet aperture of the funnel of the solar deflection device,
- rotating the solar deflection device of the solar radiation guidance device alternately to at least two positions of the cylinder units, such that for each position the collected radiation from the solar concentrator of the solar radiation guidance device is redirected to the corresponding cylinder unit,
- guiding at least a fraction of the collected radiation into the respective cylinder unit such that a working gas contained in the respective cylinder unit expands.

Further features and advantages of the invention shall be described by means of a detailed description of embodiments with reference to the figures. It is shown in:

Fig. 1    a schematic view of a device according to the invention;
Fig. 2    a schematic three-dimensional view of a device according to the invention;
Fig. 3    a schematic view of a solar reactor system according to the invention;
Fig. 4    a schematic view of a solar reactor system according to the invention; and
Fig. 5    a diagram of the chamber temperature versus time.

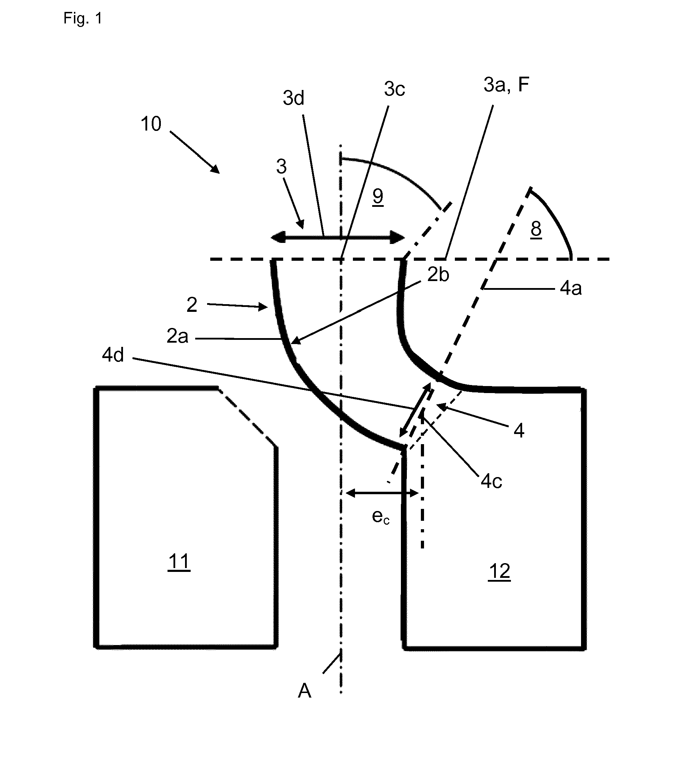

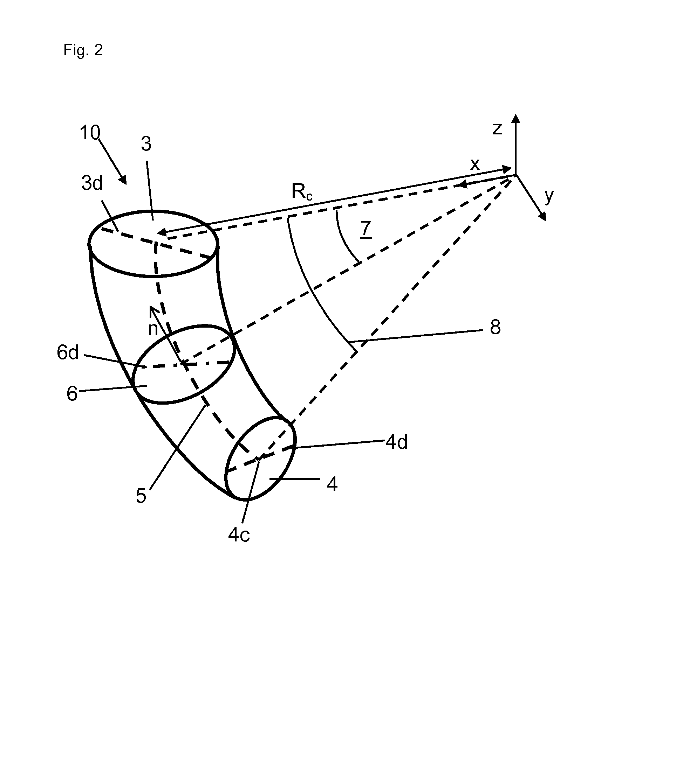

In Fig. 1 and Fig. 2 a solar deflection device 10 is shown schematically that is arranged at a focal plane F of a solar concentrator 13 and rotatably arranged along the optical axis A of said solar concentrator 13 (Fig. 1). The solar deflection device 10 comprises an inlet aperture 3 and an exit aperture 4, wherein the diameter 3d of the inlet aperture 3 is larger than the diameter 4d of the exit aperture 4. The center 4c of the exit aperture 4 is laterally shifted with respect to the center 3c of the inlet aperture 3. This shift is called the eccentricity $e_c$. The solar deflection device comprises a funnel 2 with a funnel wall 2a, that has a reflective inside 2b for reflecting incident radiation. The plane 3a that comprises the inlet aperture 3 and the plane 4a that comprises the exit aperture 4 enclose an angle 8.

The solar deflection device 10 is rotatably mounted and can be rotated around the optical axis A and adopt a first and a second position.

In Fig. 1 two chambers 11, 12 are shown that are arranged such that when the solar deflection device 10 is rotated to the first position, incident radiation is reflected such by the reflective surface 2b of the funnel 2 that it is redirected in the first chamber 11 and that when the solar deflection device 10 is rotated to the second position, incident radiation is reflected by the reflective surface 2b of the funnel 2 such that it is redirected in the second chamber 12.

In Fig. 2 a cross-section 6 through the reflective surface 2b of the funnel 2 is shown. The cross-section 6 is comprised in a plane 6a, that encloses a deflection angle 7 with the inlet plane 3a. The funnel 2, more particularly the reflective surface 2b of the funnel 2 extends along a curved line 5 that extends from the center 3c of the inlet aperture 3 to the center 4c of the exit aperture 4. The cross-section 6, particularly for any deflection angle 7 that lies between zero degree and the angle 8 between the inlet and exit plane 3a, 4a, is intersected perpendicularly from said curved line 5; that means, that the tangent n at the point of intersection of the curved line with the cross-section 6 is orthogonal to the plane 6a. The cross-section 6 is particularly circular with a diameter 6d that is particularly larger than the diameter 4d of the exit aperture 4 and smaller than the diameter 3d of the inlet aperture 3.

The curved line 5 furthermore intersects in the center 6c of the cross-section 6. In Fig. 2 the curved line 5 is a circular arc line with a radius $R_c$.

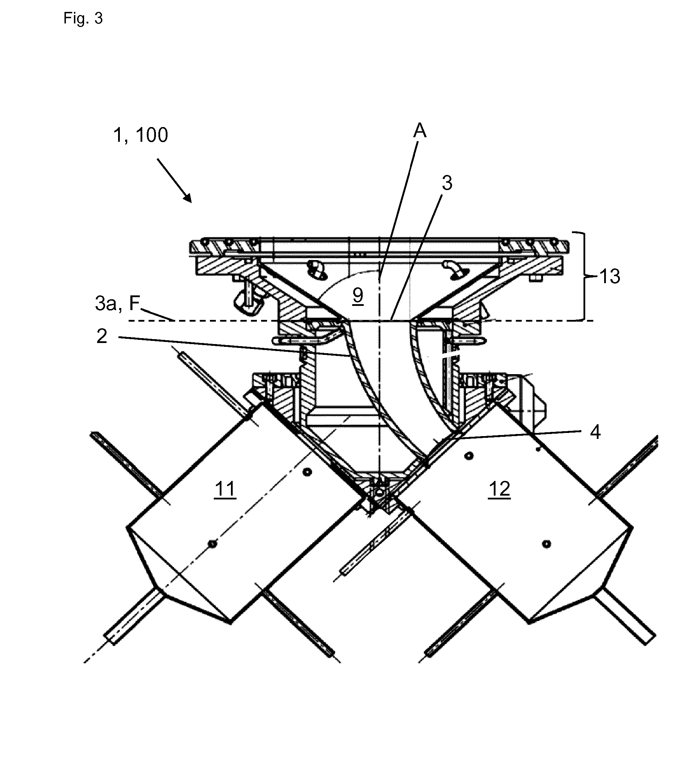

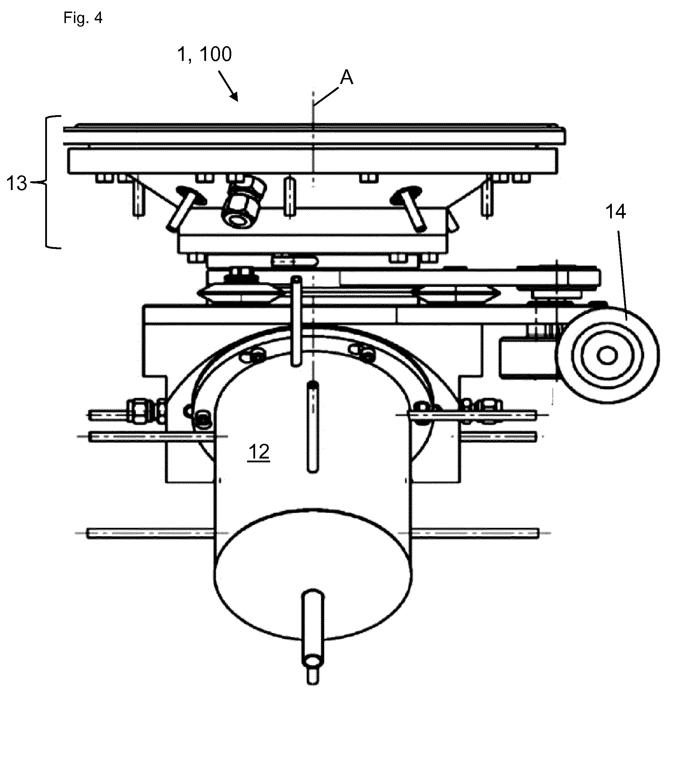

In Fig. 3 and 4 two views of a solar reactor system 100 are shown. The solar reactor system 100 comprises a first 11 and a second 12 chamber and the funnel 2 of the solar guidance device 1 is shown, wherein the solar guidance device 1 comprises the solar deflection device 10. A solar concentrator 13 is arranged such that it guides collected solar radiation to the inlet aperture 3 of the funnel 2 under a half acceptance angle 9. The funnel is arranged at the focal plane F of the solar concentrator 13. The funnel is mounted rotatably in the solar reactor system 100, such that it can adopt a first and a second position. The rotation might be facilitated by a motor 14 (Fig. 4). When the funnel 2 adopts the first position, incident solar radiation from the solar concentrator 13 is guided along a corresponding direction in the first chamber 11. When the funnel 2 adopts the second position, incident solar radiation from the solar concentrator 13 is guided along another corresponding direction in the second chamber 12.

By rotating the funnel 2 alternately between the first and the second position, energy provided by the solar radiation is delivered to the corresponding chamber 11, 12. This energy can be used to drive a chemical or a physical process.

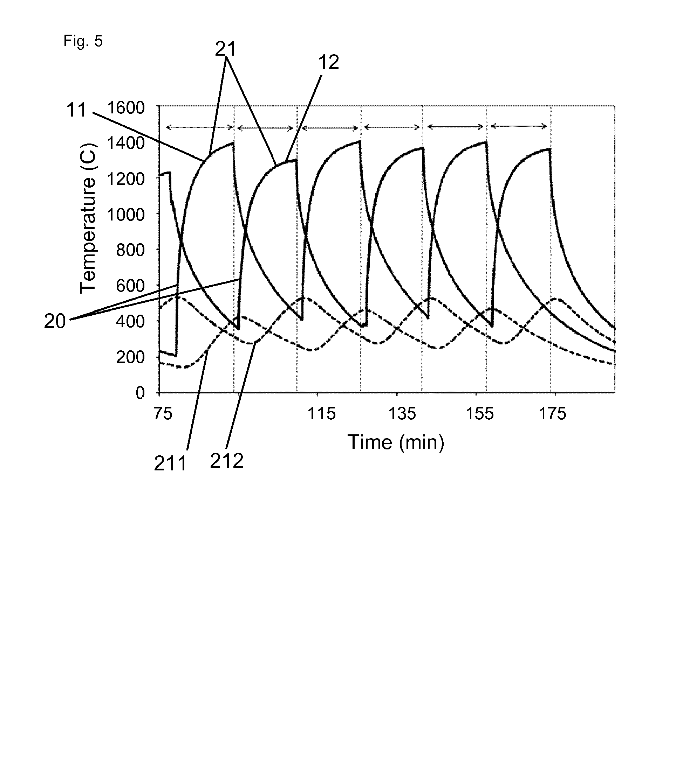

Fig. 5 shows a diagram of the course of the temperature inside the first 11 and second 12 chamber, when the solar reactor system 100 is driven according to the invention. The temperature profile 111 corresponds to the temperature inside the first chamber 11 and the temperature profile 112 corresponds to the temperature inside the second chamber 12. Furthermore the temperature profiles 211, 212 measured on the shell of the first and second chamber 11, 12 are shown. It can be seen that particularly a time interval for the cycling of the funnel 2 is advantageous that extends until the temperature profile 111, 112 is flattening with time, i.e. the temperature increase 21 at the end of the interval is less than particularly 10% of the initial temperature increase 20. In this embodiment a temporal interval of several minutes, for example 18 minutes is preferred.

Example:

A Tailored Toroid Concentrator (TTC) is used as a solar deflection device 10 for a solar guidance device 1.

Such a TTC concentrates and redirects radiation and might be used for directing concentrated radiation particularly from a single stationary source particularly to a plurality of apertures of a multiple-cavity receiver, for example an array of cavities, each with an individual aperture.

The TTC is a tailored concentrator based on a torus with geometry modified to achieve ideal concentration at maximum optical efficiency. The TTC particularly comprises all or some of the following features:

- radiation is collected by a circular inlet aperture 3 of radius $r_i$, within a nominal half acceptance angle 9 (in formulas also referred to as $\theta$), and redirected to a particularly circular exit aperture 4 with a radius $r_o$ or with a diameter 4d that is smaller than the radius $r_i$ or diameter 3d of the inlet aperture 3 respectively,
- the exit aperture 4 is tilted by a rotation angle of $\phi$, wherein said rotation angle corresponds to the largest deflection angle 7, and wherein the exit aperture 4 is furthermore laterally displaced by an eccentricity $e_c$, with respect to the inlet aperture 3,

- the eccentricity $e_c$ and rotation angle $\phi$) may be chosen to achieve the required separation and inclination of the plurality of cavity apertures,
- the geometric concentration $C = A_i/A_o$ equals the theoretical limit of $1/\sin^2(\theta)$ imposed by the three-dimensional conservation of étendue,
- the TTC features low average number of reflections, thus minimizing power loses due to finite reflectivity of mirror surfaces,
- the optical efficiency through the TTC may approach that of conventional nonimaging concentrators which only concentrate and do not redirect radiation,
- the geometry of the TTC is defined by a curved line 5 that is particularly a circular arc centerline in the two-dimensional cross-section through the plane of symmetry of the TTC,
- the geometric concentration C can be reduced from the theoretical limit by slightly increasing the exit aperture diameter 4d, leading to an increase in optical efficiency,
- the three dimensional geometry is formed by a series of circular cross-sections 6 cut at a deflection angle 7 (in formulas also referred to as $\varphi$) with respect to the inlet aperture 3,
- the normal of each circular cross-section 6 is tangent to the centerline 5 at the point of intersection,
- the diameter 6d or radius ($r(\varphi)$) of each circular cross-section 6 is defined by a function S, particularly a taper function S, with $r = S(\varphi)$, where S is particularly an interpolant of linear, quadratic, or cubic form,
- the mirror profiles may be tailored by changing the taper function S to maximize optical efficiency,
- the inner $R_i$ and outer radii $R_o$ of the solar deflection device 10 are chosen to meet the required eccentricity $e_c$ and rotation angle 8 (also referred to as $\phi$).

Example of an embodiment of a TTC

The construction of such a tailored toroidal concentrator particularly begins in the x-z plane with a curved line 5, particularly a circular arc centerline covering a rotation angle $\phi$) and radius $R_c$ centered at the origin as shown in Fig. 2. The inlet aperture 3 extends along the inlet plane 3a along the x-y-axis. The circular inlet aperture 4 with a radius $r_i$ that is smaller than the radius of the circular arc centerline $R_c$, is centered at the start of said curved line 5 (defining a deflection angle of $\varphi = 0$), laying in the x-y plane. The center-to-center eccentricity $e_c$ of the TTC is given by $e_c = R_c(1-\cos(\phi))$. Each deflection angle 7 in the range between $0 \le \varphi \le \phi$) defines a cross-section 6 that is comprised in a plane 6a that intersects the inlet plane 3a enclosing said deflection angle 7 and that is perpendicular to said curved line 5 at the point of intersection with the curved line 5. The circular exit aperture 4 with a radius $r_o$ that is smaller than the radius of the inlet aperture $r_i$, $r_o < r_i < r_c$, is centered at the end ($\varphi = \phi$) of the curved line 5 through a plane whose normal is tangent to the end of the curved line 5. The exit aperture radius $r_o$ is nominally chosen as $r_i = r_o \sin(\theta)$, corresponding to the theoretical limit of geometric concentration C for partially collimated incident radiation of the nominal half acceptance angle $\theta$. Selecting a slightly larger exit aperture radius $r_o$ may be beneficial in improving optical efficiency, with a slight reduction from the theoretical maximum geometric concentration C. The reflective surface 2b of the TTC is defined by a series of circular cross-sections 6 from the inlet to exit aperture 3 on planes 6a whose normals n are tangent to the curved line 5 at the intersection point where the respective plane 6a intersects the curved line: The "taper" of the solar deflection device 10 is the function S describing the radius r of each circular cross section 6 as a function of the deflection angle 7 (also referred to as $\varphi$). The complete parametric equations of the surface in three dimensions, for an origin placed at the center of the curved line 5, with x-z as the symmetry plane of the TTC, are:

$$r = S(\varphi)$$

$$x = (r\cos(\psi) + R_c)\cos(\varphi)$$

$$y = (r\cos(\psi) + R_c)\sin(\varphi)$$

$$z = r\sin(\psi)$$

for $0 \le \varphi \le \phi$, and $0 \le \psi < 2\pi$. The resulting shape is a surface ranging from the circular inlet aperture 3 to the circular exit aperture 4 through the circular cross-sections 6 of radius $r = S(\varphi)$.

Various taper functions S are possible, but generally interpolating functions are used. Depending on the number of interpolation points (also termed knots) used in addition to the endpoints ($\varphi = 0$, $r_i$) and ($\varphi = \phi$, $r_o$), different interpolation functions (also termed interpolants) may be used. The simplest interpolant is (with zero additional knots) the linear interpolant $r(\varphi) = r_i - (r_i - r_o)\,\varphi/\phi$. An additional interpolation point may be defined at the "waist" of the device 10 at a deflection angle $\phi_w$ (given a nominal value of $\frac{1}{2}\phi$) and radius $r_w$. It is then possible to define a piecewise linear spline, a parabola (quadratic), or piecewise cubic spline through the three knots. For $\phi_w = \frac{1}{2}\phi$, a value of $r_w = \frac{1}{2}(r_i + r_o)$ produces a linear interpolant for a spline of any degree. The waist control point can be tailored to maximize the optical transfer efficiency of the TTC. Additional knots provide additional degrees of freedom to tailor the TTC.

Due to its high degree of smoothness, the cubic spline is a preferred interpolant for the taper function S. For one additional interpolation point at the waist, a natural cubic spline $S(\varphi)$ may be fitted through knots I0, $r_i$), W($\phi_w$, $r_w$) and O($\phi_o$, $r_o$). The 3-point spline has two segments: the first segment ranges from the inlet to the waist, and second segment ranges from the waist to the exit, with second derivatives set to zero at the two ends (natural spline), and first and second derivatives matched at W. The interpolant for the j$^{th}$ segment has the form:

$$S_j(\varphi) = a_j + b_j t_j + c_j t_j^2 + d_j t_j^3$$

where $t_j = t_1 = \varphi/\phi_w$ for the first segment, and $t_j = t_2 = (\varphi - \phi_w)/(\phi - \phi_w)$ for the second segment. The coefficients of the interpolant are:

| | |
|---|---|
| $a_1 = r_i$ | $a_2 = r_w$ |
| $b_1 = 0.25(-5r_i + 6r_w - r_o)$ | $b_2 = 0\text{-}5(-r_i + r_o)$ |
| $c_1 = 0$ | $c_2 = 0.75(r_i - 2r_w + r_o)$ |
| $d_1 = 0.25(r_i - 2r_w + r_o)$ | $d_2 = 0.25(-r_i + 2r_w - r_o)$ |

One way to design such a TTC is to choose the inlet (and/or exit) aperture for maximum concentration $C = 1/\sin^2(\theta)$, and subsequently tailor the waist radius $r_w$ at half the rotation angle $\phi$ to yield the highest optical efficiency.

The particularly highest optical efficiency can be estimated for example by a computer simulation.

Geometry specification

Three different geometric constructions with an increasing number of degrees-of-freedom were investigated. In all cases, the three dimensional geometry was obtained by lofting from the circular inlet aperture to the circular outlet aperture along the specified guide curves.

Baseline

The baseline design consists of a circular centerline 5 with a radius which governs the position of the inlet and outlet aperture 3, 4. The cross-section through the reflective surface is represented by two curved lines (i.e. the guide profiles), particularly circular arc lines. The design has no degrees of freedom to be used as optimization parameters.

Spline 1

The Spline 1 design utilizes the height and eccentricity $e_c$ to position the inlet and outlet apertures 3, 4. The two guide profiles - that are the cross-sectional lines of the funnel representing the funnel wall - are natural cubic splines passing through the inlet and outlet aperture 3, 4 edges wherein the guide profile's shape is controlled by a knot placed between a beginning and an end of the guide line, particularly at the "waist" of the solar deflection device 1. There are three degrees of freedom which may be used as optimization parameters. The optimization parameters are particularly given by the radius from one of the guide profiles at a particular deflection angle, the radius of the funnel at a particular deflection angle and the height of the funnel.

Spline 2

The Spline 2 design is similar to the Spline 1 design, but the placement of the knots is not restricted to be collinear with the origin. The two guide profiles on the inside and outside of the deflection device may be chosen independently. There are five degrees of freedom which may be used as optimization parameters. The optimization parameters are particularly given by

- the radius of the line in the x-z plane from the origin to the interior knot of the inner guide profile,
- the same but for the outer guide profile,
- a first deflection angle of the line in the x-z plane from the origin to the interior knot of the inner guide profile,
- the same but for the outer guide profile , and
- the height of the solar deflection device.

Optimization was performed to maximize optical efficiency for a reflectivity of 95% at the nominal acceptance angle using $10^5$ rays. The "alternate engine" in LightTools was used with an exit criterion of less than a 10-5% improvement on the objective function. However, it is likely that the noise floor of the MC simulation provides a less strict exit criterion.

**Claims**

1. Solar radiation guidance device (1), particularly for a solar reactor system (100), comprising the following components:

   - a solar concentrator (13), for collecting and concentrating electromagnetic radiation, particularly solar and/or thermal radiation,
   - a solar deflection device (10) comprising a funnel (2) with a funnel wall (2a) that comprises a reflective surface (2b) on an inside of the funnel (2) for reflecting said radiation, wherein said funnel (2) further comprises an inlet aperture (3) and an exit aperture (4), wherein the inlet aperture (3) is comprised in an inlet plane (3a) and the exit aperture (4) is comprised in an exit plane (4a), and wherein said funnel (2) is arranged such that it collects the concentrated radiation from the solar concentrator (13),

   **characterized in that**

the solar deflection device (10) is mounted to allow rotation around a rotation axis (A) perpendicular to the inlet plane (3a) of the inlet aperture (3) between at least two positions, such that for each position of the at least two positions of the solar deflection device (10) the collected radiation from the solar concentrator (13) is redirectable through the funnel (2) along a corresponding direction.

2. Solar radiation guidance device according to claim 1, wherein the solar deflection device (10) is further **characterized by**

   - an essentially curved line (5) that extends from a center (3c) of the inlet aperture (3) to a center (4c) of the exit aperture (4), wherein for each plane (6a) that intersects said curved line (5) perpendicularly, the reflective surface (2b) of the funnel wall (2a) has a cross-section (6) along said plane (6a), wherein said cross-section (6) encloses an area and is centered around the curved line (5), wherein particularly said curved line (5) is essentially an arc line, particularly essentially a circular arc line or particularly essentially a non-parabolic line.
   - a deflection angle (7) that is enclosed between said plane (6a) and the inlet plane (3a).

3. Solar radiation guidance device according to claim 1 or 2, wherein the area enclosed by the inlet aperture (3), the exit aperture (4) and/or the cross-section (6) has an oval, particularly a circular shape or elliptical shape.

4. Solar radiation guidance device according to claim 1 to 3, wherein the area of the inlet aperture (3) is larger than the area of the exit aperture (4).

5. Solar radiation guidance device according to one of the preceding claims, wherein the enclosed area of the cross-section (6), particularly the diameter (6d) of the cross-section (6), is a continuous function of said deflection angle (7) and wherein said function is a monotonic function, particularly a strictly monotonic function.

6. Solar radiation guidance device according to one of the preceding claims, wherein the function comprises a spline, particularly a linear, a quadratic or a cubic, particularly a natural cubic spline or wherein the function is a piecewise particularly natural cubic spline connecting a plurality of interpolation points, wherein particularly the size of the enclosed area of the inlet aperture (3), particularly the diameter (3d) of the inlet aperture (3), and the size of the enclosed area of the exit aperture, particularly the diameter (4d) of the exit aperture (4) are two of the plurality of interpolation points and wherein particularly a third interpolation point corresponds to the size of enclosed area of the cross-section (6), particularly to the diameter (6d) of the cross-section (6).

7. Solar radiation guidance device according to one of the preceding claims, wherein the inlet aperture (3) and the exit aperture (4) enclose a deflection angle (7) of 45°.

8. Solar reactor system (100) comprising a solar radiation guidance device (1) according to one of the claims 1 to 7, wherein the solar reactor system (100) further comprises at least two chambers (11, 12) that are associated to the at least two positions of the solar radiation guidance device (1), wherein each chamber (11, 12) comprises an inlet opening for receiving electromagnetic, particularly solar and/or thermal radiation and wherein each chamber (11, 12) is arranged such that by rotation of the solar deflection device (10) about the rotation axis, the exit aperture (4) of the solar deflection device (10) is alignable with the inlet opening of each chamber (11, 12) such that the collected radiation is directable through the inlet opening of each chamber (11, 12).

9. Method for deflecting electromagnetic radiation, particularly solar and/or thermal radiation with a solar radiation guidance device (1) according to one of the claims 1 to 7 or a solar reactor system (100) according to claim 8, comprising the steps of:

   - providing radiation, particularly solar and/or thermal radiation to the solar concentrator (13), such that the solar concentrator (13) collects at least a fraction of the radiation,
   - providing the collected radiation to the inlet aperture (3) of the funnel (2) of the solar deflection device (10),
   - rotating the solar deflection device (10) alternately to the at least two positions, such that for each position the collected radiation is redirected along said corresponding direction.

10. Method according to claim 9, wherein for each position of the solar deflection device (10) the collected radiation is redirected in a corresponding chamber (11, 12) of at least two chambers (11, 12).

**11.** Method according to claim 10, wherein by providing radiation by rotating the solar deflection device (10) alternatingly between the at least two positions, a thermochemical reaction, particularly a reversible thermochemical reaction, is driven, such that an endothermic transformation is taking place in the corresponding chamber (12) to which the radiation is redirected, and that an exothermic transformation is taking place in at least one of the other chambers (11) of the at least two chambers (11, 12).

**12.** Method according to claim 10 or 11, wherein by providing radiation by rotating the solar deflection device (10) alternatingly between the at least two positions, a thermal energy charging-discharging process is driven, such that heating or melting of material is taking place in the corresponding chamber (12) to which the radiation is redirected, and that cooling or solidification of material is taking place in at least one of the other chambers (11) of the at least two chambers (11, 12).

**13.** Method according to claim 11, wherein a first compound and a second compound are provided for the thermochemical reaction, particularly reversible thermochemical reaction, within the at least two chambers (11, 12), wherein the first compound is reduced to the second compound, particularly thermally reduced, when the particularly solar and/or thermal radiation is redirected in the corresponding chamber (12) and/or wherein the second compound is oxidized to the first compound, particularly thermally oxidized, when the radiation is redirected in another chamber (11) of the at least two the chambers (11, 12).

**14.** Method according to claim 13, wherein the first compound comprises at least one of:

- a metal oxide,
- a metal-based oxide,
- a doped-oxide and/or
- a perovskite-type oxide.

**15.** Method according to claim 13 or 14, wherein a third compound is provided with the second compound and wherein said third compound is reduced when the second compound is oxidized, wherein said third compound is particularly water and/ or carbon dioxide.

Fig. 1

Fig. 2

Fig. 3

Fig. 4

1, 100

A

13

14

12

Fig. 5

Europäisches
Patentamt

European
Patent Office

Office européen
des brevets

# EUROPEAN SEARCH REPORT

Application Number

EP 15 15 9207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2009/001106 A2 (STOLUM HANS-HENRIK KOFOED [GB]) 31 December 2008 (2008-12-31) * figures 2a, 2b * ----- | 1-15 | INV. F24J2/06 F24J2/07 |
| A | US 5 531 969 A (TAMME RAINER [DE] ET AL) 2 July 1996 (1996-07-02) * figures * ----- | 1-15 | |
| A | EP 2 348 342 A1 (SHARP KK [JP]) 27 July 2011 (2011-07-27) * figures * ----- | 1-15 | |

TECHNICAL FIELDS
SEARCHED      (IPC)

F24J

The present search report has been drawn up for all claims

| Place of search | Date of completion of the search | Examiner |
|---|---|---|
| The Hague | 17 August 2015 | Fernandez Ambres, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 15 15 9207

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2015

| Patent document cited in search report | | Publication date | Patent family member(s) | | Publication date |
|---|---|---|---|---|---|
| WO 2009001106 | A2 | 31-12-2008 | EP<br>US<br>WO | 2174070 A2<br>2010212719 A1<br>2009001106 A2 | 14-04-2010<br>26-08-2010<br>31-12-2008 |
| US 5531969 | A | 02-07-1996 | DE<br>US | 4134614 A1<br>5531969 A | 22-04-1993<br>02-07-1996 |
| EP 2348342 | A1 | 27-07-2011 | CN<br>EP<br>US | 102122061 A<br>2348342 A1<br>2011162712 A1 | 13-07-2011<br>27-07-2011<br>07-07-2011 |

EPO FORM P0459

For more details about this annex : see Official Journal of the European Patent Office, No. 12/82